# EUROPEAN PATENT APPLICATION

(11) **EP 4 770 086 A1**
(43) Date of publication of application: **01.07.2026**
(21) Application number: 24899236.4
(22) Date of filing: 09.07.2024
(51) Int. Cl.: H04N 19/119

(54) **IMAGE PROCESSING METHOD AND APPARATUS, AND COMPUTER-READABLE STORAGE MEDIUM**

(30) Priority: 08.12.2023 CN 202311691334
(71) Applicant: TENCENT TECHNOLOGY (SHENZHEN) COMPANY LIMITED, Shenzhen, Guangdong 518057 (CN)
(72) Inventor: WANG, Liqiang, Shenzhen, Guangdong 518057 (CN); XU, Xiaozhong, Shenzhen, Guangdong 518057 (CN)
(74) Representative: AWA Sweden AB
(86) International application number: PCT/CN2024/104476
(87) International publication number: WO 2025/118585

(57) **Abstract**

Disclosed are an image processing method and apparatus, a device, and a storage medium. The method comprises: an encoder side obtains a video frame to be encoded, and encodes a video frame on the basis of a scale of a target block to obtain code stream data of the video frame, wherein the target block is obtained by dividing the video frame, and the scale of the target block is used for determining encoding/decoding information of the target block; a decoder side obtains the code stream data of the video frame which comprises encoded data of the video frame, decodes the encoded data of the video frame on the basis of the scale of the target block, and presents the video frame. Hence, in an encoding/decoding process, the encoding/decoding information of the target block (for example, how the target block is divided, and whether a residual exists) is determined on the basis of the scale of the target block, so that the encoding/decoding process of the video frame can be optimized (for example, a division flag of the target block does not need to be configured/parsed), thereby improving the trade-off between encoding/decoding performance and complexity in the video frame encoding/decoding process.

## Description

### RELATED APPLICATION

This application claims priority to Chinese Patent Application No. 2023116913343, filed with the China National Intellectual Property Administration on December 8, 2023 and entitled "IMAGE PROCESSING METHOD AND APPARATUS AND COMPUTER-READABLE STORAGE MEDIUM", which is incorporated herein by reference in its entirety.

### FIELD OF THE TECHNOLOGY

The present disclosure relates to the field of computer technologies, and in particular, to an image processing method and apparatus and a computer-readable storage medium.

### BACKGROUND OF THE DISCLOSURE

In response to the advancement of scientific and technological research, massive video resources emerge from the Internet. Because many videos (for example, live streaming and online videos) are transmitted real-time, technical personnel focus on improving encoding and decoding performance to meet an increasing video (for example, definition) requirement of a video consumer. It is found through research that when the encoding and decoding performance is improved, encoding and decoding complexity is usually improved. How to improve the trade-off between the encoding and decoding performance and the complexity in an encoding and decoding process of a video frame becomes a hot research issue currently.

### SUMMARY

Embodiments of the present disclosure provide an image processing method and apparatus, a device, and a computer-readable storage medium, which can improve the trade-off between encoding and decoding performance and complexity in an encoding and decoding process of a video frame.

According to an aspect, an embodiment of the present disclosure provides an image processing method, including:
obtaining code stream data of a video frame, the code stream data including encoded data of the video frame; and
decoding the encoded data of the video frame based on a scale of a target block, and presenting the video frame, the target block being obtained by dividing the video frame, and the scale of the target block being configured for determining encoding and decoding information of the target block.

In the embodiments of the present disclosure, the code stream data of the video frame is obtained, the code stream data including the encoded data of the video frame. The encoded data of the video frame is decoded based on a scale of a target block, and the video frame is presented, the target block being obtained by dividing the video frame, and the scale of the target block being configured for determining the encoding and decoding information of the target block. It may be seen that in a decoding process, the encoding and decoding information (for example, a manner of dividing the target block, and whether a residual exists) of the target block is determined through the scale of the target block, so that the video frame decoding process (for example, a division flag bit of the target block does not need to be parsed) can be optimized and decoding complexity is reduced, thereby improving the trade-off between encoding and decoding performance and complexity in the encoding and decoding process of the video frame.

According to an aspect, an embodiment of the present disclosure provides an image processing method, including:
obtaining a video frame to be encoded; and
encoding the video frame based on a scale of a target block, to obtain code stream data of the video frame, the target block being obtained by dividing the video frame, and the scale of the target block being configured for determining encoding and decoding information of the target block.

In the embodiments of the present disclosure, the video frame to be encoded is obtained, and the video frame is encoded based on the scale of the target block, to obtain the code stream data of the video frame, the target block being obtained by dividing the video frame, and the scale of the target block being configured for determining the encoding and decoding information of the target block. It may be seen that in an encoding process, the encoding and decoding information (for example, a manner of dividing the target block, and whether a residual exists) of the target block is determined through the scale of the target block, so that the video frame encoding process (for example, a division flag bit of the target block does not need to be configured) can be optimized and encoding complexity is reduced, thereby improving the trade-off between encoding and decoding performance and complexity in the encoding and decoding process of the video frame.

According to an aspect, an embodiment of the present disclosure provides an image processing apparatus, including:
an obtaining unit, configured to obtain code stream data of a video frame, the code stream data including encoded data of the video frame; and
a processing unit, configured to decode the encoded data of the video frame based on a scale of a target block, and present the video frame, the target block being obtained by dividing the video frame, and the scale of the target block being configured for determining encoding and decoding information of the target block.

According to an aspect, an embodiment of the present disclosure provides an image processing apparatus, including:
an obtaining unit, configured to obtain a video frame to be encoded; and
a processing unit, configured to encode the video frame based on a scale of a target block, to obtain code stream data of the video frame, the target block being obtained by dividing the video frame, and the scale of the target block being configured for determining encoding and decoding information of the target block.

Correspondingly, the present disclosure provides a computer device, the computer device including:
a memory, having a computer program stored therein; and
a processor, configured to load the computer program to implement the foregoing image processing method.

Correspondingly, the present disclosure provides a computer-readable storage medium, having a computer program stored therein, the computer program being loaded and executed by a processor to implement the foregoing image processing method.

Correspondingly, the present disclosure provides a computer program product or a computer program, the computer program product or the computer program including a computer instruction, the computer instruction being stored in a computer-readable storage medium. A processor of a computer device reads the computer instruction from the computer-readable storage medium, and the processor executes the computer instruction, so that the computer device performs the foregoing image processing method.

In the embodiments of the present disclosure, an encoder side obtains the video frame to be encoded, and encodes the video frame based on the scale of the target block, to obtain the code stream data of the video frame, the target block being obtained by dividing the video frame, and the scale of the target block being configured for determining encoding and decoding information of the target block. A decoder side obtains the code stream data of the video frame, the code stream data including encoded data of the video frame, decodes the encoded data of the video frame based on the scale of the target block, and presents the video frame. It may be seen that in the encoding and decoding process, the encoding and decoding information (for example, a manner of dividing the target block, and whether a residual exists) of the target block is determined through the scale of the target block, so that the video frame encoding and decoding process (for example, a division flag bit of the target block does not need to be configured/parsed) can be optimized and encoding and decoding complexity is reduced, thereby improving the trade-off between encoding and decoding performance and complexity in the encoding and decoding process of the video frame.

### BRIEF DESCRIPTION OF THE DRAWINGS

To describe the technical solutions in embodiments of the present disclosure or in the related art more clearly, the accompanying drawings required for describing the embodiments or the related art are briefly described below. Apparently, the accompanying drawings in the following description merely show some embodiments of the present disclosure, and a person of ordinary skill in the art may still derive other accompanying drawings from these accompanying drawings without creative efforts.
FIG. 1a is a schematic diagram of a video encoding and decoding framework according to an embodiment of the present disclosure.
FIG. 1b is a schematic diagram of a block division method in a fourth generation audio video encoding and decoding standard according to an embodiment of the present disclosure.
FIG. 1c is a schematic diagram of a division result of a coding tree unit (CTU) according to an embodiment of the present disclosure.
FIG. 1d is a schematic diagram of an image processing scenario according to an embodiment of the present disclosure.
FIG. 2 is a flowchart of an image processing method according to an embodiment of the present disclosure.
FIG. 3 is a schematic diagram of a right boundary block and a lower boundary block according to an embodiment of the present disclosure.
FIG. 4 is a flowchart of another image processing method according to an embodiment of the present disclosure.
FIG. 5 is a schematic structural diagram of an image processing apparatus according to an embodiment of the present disclosure.
FIG. 6 is a schematic structural diagram of another image processing apparatus according to an embodiment of the present disclosure.
FIG. 7 is a schematic structural diagram of a computer device according to an embodiment of the present disclosure.

### DESCRIPTION OF EMBODIMENTS

Technical solutions in embodiments of the present disclosure are clearly and completely described below with reference to accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts fall within the protection scope of the present disclosure.

The present disclosure relates to encoding and decoding technologies, and the related encoding and decoding technologies are briefly described as follows.

Coding unit (CU): It refers to a basic unit when a video frame is encoded. In an encoding process, a CU may refer to an entire video frame (in response to that/when the video frame is not divided), or may refer to a partial region in the video frame (in response to that/when the video frame is divided).

Intra-frame prediction: It refers to a process in which a CU is encoded without referring to information about another video frame in a video than a video frame to which the CU belongs.

Inter-frame prediction: It refers to a process in which a CU is encoded by referring to information about a video frame in a video that is adjacent to a video frame to which the CU belongs.

Video signal: It may be shot by a camera, or may be generated by a computer device. In an encoding and decoding process, because property statistics collection manners of video signals are different, encoding and decoding manners corresponding to the video signals may also be different.

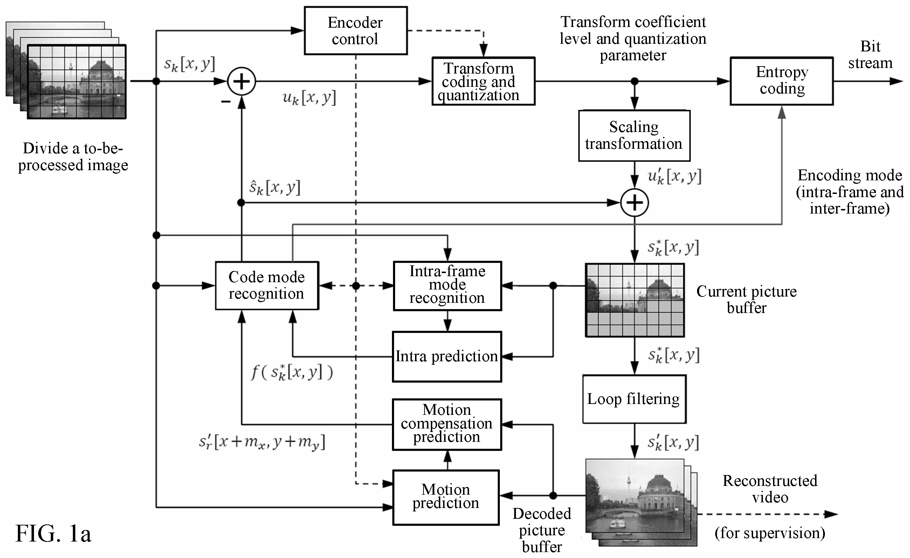

In modern mainstream video coding technologies, for example, an international video coding standard such as high efficiency video coding (HEVC), versatile video coding (VVC), and Chinese national video coding standard such as an audio video coding standard (AVS), a hybrid coding framework is used. FIG. 1a is a schematic diagram of a video encoding and decoding framework according to an embodiment of the present disclosure. As shown in FIG. 1a, in an encoding and decoding process, the following series of operations and processing are performed on an original video signal that is inputted.
1) Block partition structure: An inputted image is processed into a plurality of non-overlapping processing units based on a size of a processing unit, and a similar compression operation is performed on each processing unit. The processing unit is referred to as a coding tree unit (CTU) or a largest coding unit (LCU). The CTU may be further divided more finely to obtain one or more basic coding units, which are referred to as CUs. Each CU is the most basic element in an encoding process.

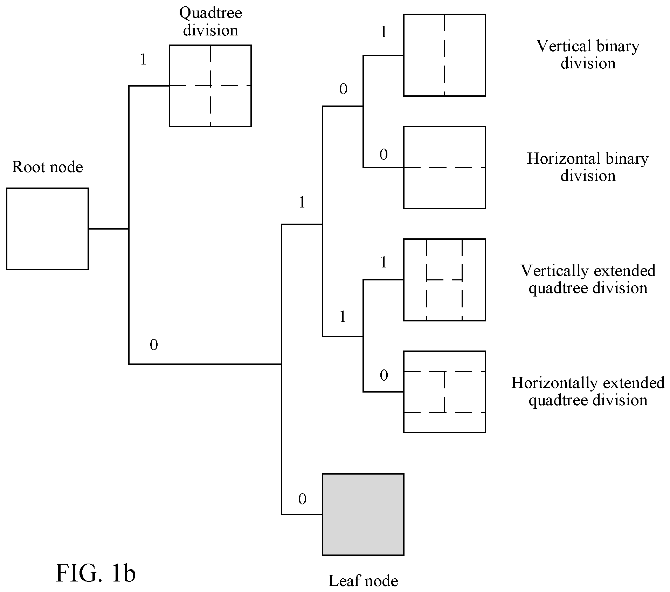

FIG. 1b is a schematic diagram of a block division method in a fourth generation audio video encoding and decoding standard according to an embodiment of the present disclosure. As shown in FIG. 1b, three types of division trees in the fourth generation audio video encoding and decoding standard (AVS4) exist, which are a quadtree, a binary tree (horizontal and vertical), and an extended quadtree (horizontal and vertical). Through recursive division of the three types of division trees, an entire CTU may be divided into a state more suitable for prediction. Different division modes may be indicated through a division flag bit. For example, a flag bit corresponding to quadtree division is 1, and a flag bit corresponding to vertical binary division is 0101.

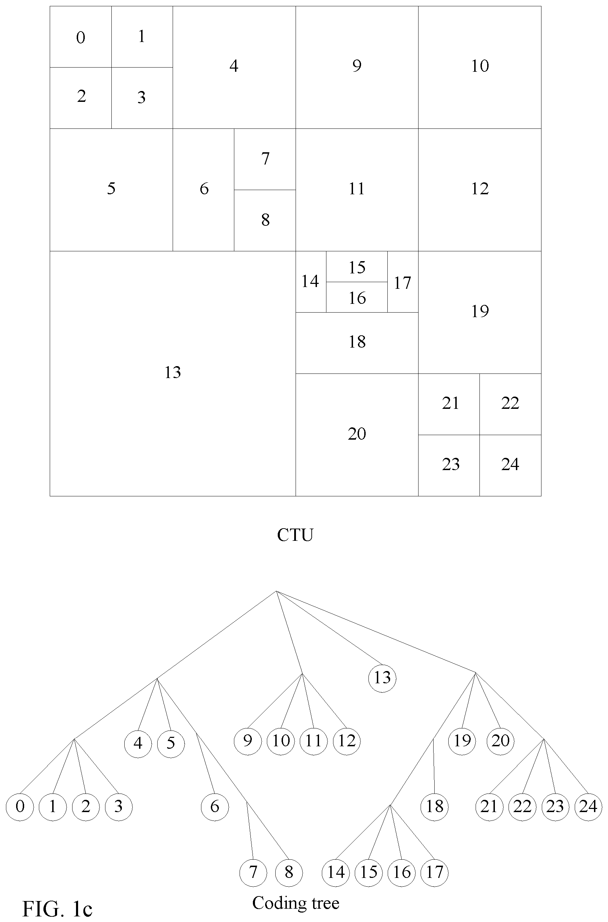

FIG. 1c is a schematic diagram of a division result of a CTU according to an embodiment of the present disclosure. As shown in FIG. 1c, an entire CTU is divided into 25 to-be-encoded blocks. An encoding device writes a block division result into a code stream. For example, the encoding device may indicate a CTU division mode in the code stream based on a division flag bit in FIG. 1b and a coding tree corresponding to the CTU in FIG. 1c. The decoding device parses the division flag bit in the code stream, to obtain the CTU division mode.
2) Predictive coding: It includes modes such as intra prediction and inter prediction. After an original video signal is predicted through a selected reconstructed video signal, a residual video signal is obtained. A content production device is required to select a most suitable one from numerous possible predictive encoding modes for a current CU, and inform a content playback device.
   a. Intra-frame prediction: A predicted signal comes from a region that has been encoded and reconstructed in the same image.
   b. Inter-frame prediction: A predicted signal comes from another encoded image (referred to as a reference image) that is different from a current image.
3) Transform coding and quantization (Transform & Quantization): A residual video signal is transformed into a transform domain through a transform operation such as discrete Fourier transform (DFT) or discrete cosine transform (DCT), to generate a transform coefficient. A lossy quantization operation is further performed on the signal in the transform domain, which loses a specific amount of information, so that the quantized signal facilitates compression and expression. In some video coding standards, more than one transform mode may be selected. Therefore, the content production device also needs to select one of the transform modes for a current to-be-encoded CU, and inform the content playback device. Fineness of quantization is generally determined by a quantization parameter (QP). A larger QP indicates that coefficients with a larger value range are to be quantized to the same output, which usually brings greater distortion and a lower code rate. On the contrary, a smaller QP indicates that coefficients within a smaller value range are to be quantized to the same output, which usually brings less distortion and a higher code rate.
4) Entropy coding or statistical coding: Statistical compression coding is performed on the quantized signal in the transform domain according to a frequency of occurrence of each value, and finally a binarized (0 or 1) compressed bit stream is outputted. In addition, entropy coding also needs to be performed on other information generated during the coding, such as a selected mode and a motion vector, to reduce a code rate. Statistical coding is a lossless encoding mode that can effectively reduce a bit rate required for expressing the same signal. Common statistical encoding modes include variable length coding (VLC) or context adaptive binary arithmetic coding (CABAC).
5) Loop filtering: Operations such as inverse quantization, inverse transform, and predictive compensation (reverse operations of the foregoing operations 2 to 4) may be performed on a coded image to obtain a reconstructed decoded image. Specifically, on a decoder side, for each CU, after obtaining a compressed code stream, a decoding device first performs entropy decoding on the compressed code stream to obtain predictive encoding mode information and quantized transform coefficients. According to an aspect, the decoding device obtains a residual signal after performing inverse quantization and inverse transform on the quantized transform coefficients. According to another aspect, the decoding device determines, based on information about the predictive encoding mode, a prediction signal corresponding to the current CU. The reconstructed signal of the CU may be obtained based on the residual signal and the prediction signal of the CU. Finally, a loop filtering operation is required to be performed on a reconstructed value of the decoded image needs to generate a final output signal. The reconstructed image has some different information from an original image as a result of quantization, resulting in distortion. A filtering operation is performed on the reconstructed image, for example, through filters such as a deblocking filter, a sample adaptive offset (SAO) filter, or an adaptive loop filter (ALF), which can effectively reduce a degree of distortion caused by quantization. Since the filtered reconstructed image is used as a reference for subsequently coding images so as to predict future signals, the above filtering operation is also referred to as loop filtering, that is, a filtering operation in a coding loop.

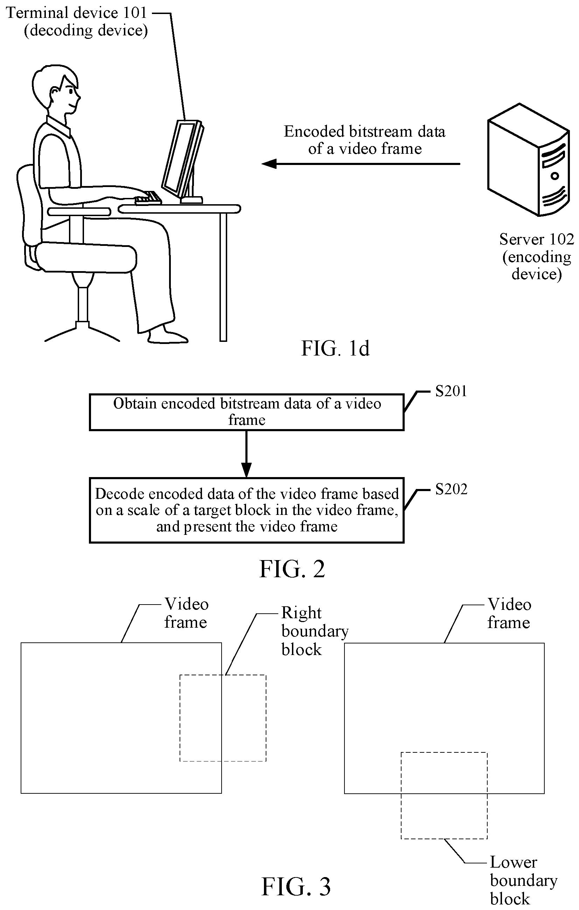

Based on the foregoing encoding and decoding-related technologies, the embodiments of the present disclosure provide an image processing solution, which can improve the trade-off between encoding and decoding performance and complexity in an encoding and decoding process of a video frame. FIG. 1d is a schematic diagram of an image processing scenario according to an embodiment of the present disclosure. As shown in FIG. 1d, the image processing scenario provided in the present disclosure includes a terminal device 101 and a server 102. The image processing solution provided in the present disclosure may be executed by the terminal device 101 or the server 102. The terminal device may include but is not limited to a smartphone (such as an Android phone or an IOS phone), a tablet computer, a portable personal computer, a mobile internet device (MID), an onboard terminal, a smart home appliance, an aircraft, and a wearable device, which is not limited in this embodiment of the present disclosure. The server may be an independent physical server, or may be a server cluster formed by a plurality of physical servers or a distributed system, and may further be a cloud server providing basic cloud computing services such as cloud service, a cloud database, cloud computing, a cloud function, cloud storage, a network service, cloud communication, a middleware service, a domain name service, a security service, a content delivery network (CDN), and a big data and artificial intelligence platform, which is not limited in this embodiment of the present disclosure.

A quantity of terminal devices and servers in FIG. 1d is merely used as an example, and does not constitute an actual limitation on the present disclosure. The terminal device 101 may be connected to the server 102 in a wired or wireless manner, which is not limited in the present disclosure.

A general process of the image processing solution provided in the present disclosure is as follows: The server 102 obtains a video frame to be encoded, and encodes the video frame based on a scale of a target block in the video frame, to obtain code stream data of the video frame. The target block is obtained by dividing the video frame. Specifically, the target block may be a to-be-divided block (a block that continues to be divided), or may be a CU (which does not continue to be divided). The scale of the target block is configured for determining encoding and decoding information of the target block. In an implementation, the server 102 obtains a scale parameter of the video frame. The scale parameter is configured for optimizing an encoding and decoding process (for example, a manner of dividing the target block and determining whether a residual exists in the target block) of the target block. The scale parameter of the video frame includes at least one of the following: a CTU parameter of the video frame, a maximum inter-frame transformation parameter of the video frame, or a maximum intra-frame prediction parameter of the video frame. In a video to which the video frame belongs, different types of video frames (for example, a key frame and a non-key frame) have different scale parameters, and the same type of video frames may have the same scale parameter or different scale parameters. The server 102 encodes the video frame based on the scale of the target block and the scale parameter, to obtain the code stream data of the video frame. In another implementation, the target block is a lower boundary block or a right boundary block of the video frame, and the server 102 encodes the video frame based on an aspect ratio of the target block, to obtain the code stream data of the video frame.

Correspondingly, the terminal device 101 obtains code stream data of a video frame, the code stream data including encoded data of the video frame. The terminal device 101 decodes the encoded data of the video frame based on the scale of the target block in the video frame, and presents the video frame. In an implementation, the code stream data further includes a scale parameter of the video frame, and the terminal device 101 decodes the encoded data of the video frame based on the scale of the target block and the scale parameter, and presents the video frame based on a decoding result. In another implementation, the target block is a lower boundary block or a right boundary block of the video frame, and the terminal device 101 decodes the video frame based on the aspect ratio of the target block, and presents the video frame based on a decoding result.

In the embodiments of the present disclosure, an encoder side obtains the video frame to be encoded, and encodes the video frame based on the scale of the target block, to obtain the code stream data of the video frame, the target block being obtained by dividing the video frame, and the scale of the target block being configured for determining encoding and decoding information of the target block. A decoder side obtains the code stream data of the video frame, the code stream data including encoded data of the video frame, decodes the encoded data of the video frame based on the scale of the target block, and presents the video frame. It may be seen that in the encoding and decoding process, the encoding and decoding information (for example, a manner of dividing the target block, and whether a residual exists) of the target block is determined through the scale of the target block, so that the video frame encoding and decoding process (for example, a division flag bit of the target block does not need to be configured/parsed) can be optimized and encoding and decoding complexity is reduced, thereby improving the trade-off between encoding and decoding performance and complexity in the encoding and decoding process of the video frame.

Based on the foregoing image processing solution, an embodiment of the present disclosure provides a more detailed image processing method. The image processing method provided in the embodiments of the present disclosure is described in detail below with reference to the accompanying drawings.

FIG. 2 is a flowchart of an image processing method according to an embodiment of the present disclosure. The image processing method may be performed by a computer device, for example, by the terminal device 101 shown in FIG. 1d. As shown in FIG. 2, the image processing method may include operation S201 and operation S202 below.

S201: Obtain code stream data of a video frame.

The code stream data includes the encoded data of the video frame. The encoded data may include encoding and decoding information of a target block in the video frame. The target block is obtained by dividing the video frame. The target block may be a to-be-divided block or may be a CU. The encoding and decoding information of the target block may include at least one of the following: a manner of dividing the target block, a residual flag bit, and a predictive encoding mode. For example, when the target block is the to-be-divided block, the encoding and decoding information of the target block may include the manner of dividing the target block. When the target block is the CU, the encoding and decoding information of the target block may include the residual flag bit and the predictive encoding mode of the target block.

S202: Decode the encoded data of the video frame based on a scale of the target block in the video frame, and present the video frame.

The scale of the target block is configured for determining encoding and decoding information of the target block.

In an implementation, the code stream data further includes a scale parameter of the video frame. The scale parameter is configured for optimizing an encoding and decoding process (for example, a manner of dividing the target block and determining whether a residual exists in the target block) of the target block. In a video to which the video frame belongs, different types of video frames (for example, a key frame and a non-key frame) may have the same scale parameter or different scale parameters. For example, the scale parameter is a CTU parameter, and the key frame and the non-key frame in the video have different CTU parameters. The same type of video frames may have the same scale parameter or different scale parameters. The scale parameter of the video frame includes at least one of the following: a CTU parameter of the video frame, a maximum inter-frame transformation parameter of the video frame, or a maximum intra-frame prediction parameter of the video frame. The computer device decodes the encoded data of the video frame based on the scale of the target block and the scale parameter, and presents the video frame based on a decoding result.

The code stream data includes at least one video sequence of a video to which the video frame belongs, each video sequence including encoded data of at least one video frame, and the encoded data of any video frame including an image header of the video frame. The scale parameter of the video frame may be a default value, or may be configured based on the video frame. If the scale parameter of the video frame is the default value, the computer device decodes the encoded data of the video frame based on the default value (a default scale parameter) and the scale of the target block, and presents the video frame. The default value is a parameter agreed on by an encoding device and a decoding device (the computer device) in advance, or is a parameter specified in an encoding and decoding standard. If the scale parameter of the video frame is configured based on the video frame, the scale parameter of the video frame is carried in a sequence header of a video sequence to which the video frame belongs, or in the image header of the video frame.

The scale parameter of the video frame may also be partially configured through the default value, and partially configured based on the video frame. In an embodiment, the scale parameter includes a CTU parameter of the video frame, a maximum inter-frame transformation parameter of the video frame, and a maximum intra-frame prediction parameter of the video frame. The CTU parameter of the video frame is configured based on the video frame (included in the code stream data), and the maximum inter-frame transformation parameter of the video frame and the maximum intra-frame prediction parameter of the video frame use the default value. For example, the encoding device may configure the CTU parameter of the video frame to 256, and the CTU parameter is carried in the code stream data. In this case, the encoding and decoding device defaults that the maximum intra-frame prediction parameter of the key frame is 64, the maximum intra-frame prediction parameter of the non-key frame is 128 (namely, the key frame and the non-key frame have different maximum intra-frame prediction parameters), and the maximum inter-frame transformation parameter of the non-key frame is 128. When the default value is used, the maximum intra-frame prediction parameter of the key frame, the maximum intra-frame prediction parameter of the non-key frame, and the maximum inter-frame transformation parameter of the non-key frame may not be carried in the code stream data. For another example, the encoding device may configure the CTU parameter of the video frame to 256, and the CTU parameter is carried in the code stream data. In this case, the encoding and decoding device defaults that the maximum intra-frame prediction parameter of the key frame is 64, the maximum intra-frame prediction parameter of the non-key frame is 64 (namely, the key frame and the non-key frame have the same maximum intra-frame prediction parameter), the maximum inter-frame transformation parameter of the non-key frame is 128. When the default value is used, the maximum intra-frame prediction parameter of the key frame, the maximum intra-frame prediction parameter of the non-key frame, and the maximum inter-frame transformation parameter of the non-key frame may not be carried in the code stream data.

The encoded data of the video frame is decoded through the default value (the default scale parameter) and the scale of the target block. Compared with decoding the encoded data of the video frame through the configured scale parameter and the scale of the target block, the scale parameter does not need to be indicated in the code stream data of the video frame (or to reduce a data volume of the scale parameter), and the data volume of the code stream data of the video frame is further compressed. When the scale parameter of the video frame is carried in the sequence header of the video sequence to which the video frame belongs, the scale parameter may be configured for indicating a scale of the video frame in the video sequence to which the video frame belongs. Compared with being carried in the image header of the video frame, the data volume of the code stream data may be further compressed. When the scale parameter is carried the image header of the video frame, a scale of a single video frame may be indicated. Compared with being carried in the sequence header, the scale parameter is more flexible.

In an embodiment, the scale parameter includes a CTU parameter corresponding to the video frame, and the encoded data of the video frame is derived based on the CTU parameter. The computer device determines the predictive encoding parameter of the video frame through the CTU parameter and a preset ratio. The predictive encoding parameter includes at least one of the maximum inter-frame transformation parameter of the video frame and the maximum intra-frame prediction parameter of the video frame, the preset ratio being 1/N, and N being a positive integer. For example, assuming that N=2, the CTU is 256, and the predictive encoding parameter includes the maximum inter-frame transformation parameter of the video frame and the maximum intra-frame prediction parameter of the video frame, the maximum inter-frame transformation parameter of the video frame is 256*1/2=128, and the maximum intra-frame prediction parameter of the video frame is 256*1/2=128. After the predictive encoding parameter of the video frame is obtained, the computer device decodes the encoded data of the video frame based on the scale of the target block and the predictive encoding parameter of the video frame, and presents the video frame based on the decoding result.

In another embodiment, the scale parameter includes the maximum intra-frame prediction parameter, the video frame is the non-key frame, and the target block is the CU. A process in which the computer device decodes the encoded data of the video frame based on the scale of the target block and the scale parameter includes the following. If the scale of the target block is greater than the scale indicated by the maximum intra-frame prediction parameter, the computer device determines that the predictive encoding mode of the target block is a non-intra-frame prediction (for example, using inter-frame prediction), or decodes the target block through the first context model. When the predictive encoding mode includes only the intra-frame prediction and the inter-frame prediction, the computer device may directly determine the predictive encoding mode of the target block as the inter-frame prediction. The first context model is specifically configured to decode a CU whose scale is greater than the scale indicated by the maximum intra-frame prediction parameter in the non-key frame. The target block is decoded specifically for the first context model of the target block, which can further improve prediction accuracy of the target block and reduce decoding complexity.

For example, assuming that the video frame is the non-key frame, the target block is the CU, the scale of the target block is 256*256, the maximum intra-frame prediction parameter is 128 (or 64), and the indicated scale is 128*128 (or 64*64), the computer device determines that the predictive encoding mode of the target block is the non-intra-frame prediction, or decodes the target block through the first context model.

In another embodiment, the scale parameter includes the maximum inter-frame transformation parameter, the video frame is the non-key frame, and the target block is the to-be-divided block (a block that needs to be further divided, which may be indicated through the division flag bit). A process in which the computer device decodes the encoded data of the video frame based on the scale of the target block and the scale parameter includes the following. If the height of the target block is greater than the height indicated by the maximum inter-frame transformation parameter and the width of the target block is less than or equal to the width indicated by the maximum inter-frame transformation parameter, the computer device performs horizontal binary division on the target block, or the computer device may parse the division flag bit of the target block, and decode the target block through a second context model. If the height of the target block is less than or equal to the height indicated by the maximum inter-frame transformation parameter and the width of the target block is greater than the width indicated by the maximum inter-frame transformation parameter, the computer device performs vertical binary division on the target block, or the computer device may parse the division flag bit of the target block, and decode the target block through a third context model. The second context model is specifically configured to decode a to-be-divided block whose height is greater than the height indicated by the maximum inter-frame transformation parameter and whose width is less than or equal to the width indicated by the maximum inter-frame transformation parameter in the non-key frame. The third context model is specifically configured to decode a to-be-divided block whose height is less than or equal to the height indicated by the maximum inter-frame transformation parameter and whose width is greater than the width indicated by the maximum inter-frame transformation parameter in the non-key frame. When the target block satisfies a condition, the target block is decoded through the dedicated second context model or the third context model, which can further improve prediction accuracy of the target block and reduce decoding complexity.

For example, assuming that the target block is the to-be-divided block, the video frame is the non-key frame, the scale (the width*the height) of the target block is 256*128, the maximum inter-frame transformation parameter is 128, and the scale (the width*the height) indicated by the maximum inter-frame transformation parameter is 128*128, namely, the width of the target block is greater than the width indicated by the maximum inter-frame transformation parameter, and the height of the target block is less than or equal to the height indicated by the maximum inter-frame transformation parameter, the computer device performs vertical binary division on the target block, or decodes the target block through the third context model.

In yet another embodiment, the scale parameter includes the maximum inter-frame transformation parameter, and the target block is the CU (which does not need to be further divided, and may be indicated through the division flag bit). The process in which the computer device decodes the encoded data of the video frame based on the scale of the target block and the scale parameter includes the following. If the scale of the target block is greater than the scale indicated by the maximum inter-frame transformation parameter, the computer device determines that the target block has no residual, or the computer device may parse a residual flag bit of the target block, and decode the target block through a fourth context model. The fourth context model is specifically configured to decode a CU whose scale is greater than the scale indicated by the maximum inter-frame transformation parameter in the video frame. When the target block satisfies the condition, the target block is decoded through the dedicated fourth context model, which can further improve prediction accuracy of the target block and reduce decoding complexity.

For example, assuming that the target block is the CU, the scale of the target block is 256*256, and the maximum inter-frame transformation parameter is 128 (the indicated scale is 128*128), the computer device determines that the target block has no residual, or decodes the target block through the fourth context model.

In another embodiment, the scale parameter includes the maximum intra-frame prediction parameter, and the video frame is the key frame. The process in which the computer device decodes the encoded data of the video frame based on the scale of the target block and the scale parameter includes the following. If the scale of the target block is greater than the scale indicated by the maximum intra-frame prediction parameter, the computer device performs quadtree division on the target block, or the computer device may parse the division flag bit of the target block, and decode the target block through a fifth context model. The fifth context model is specifically configured to decode a block whose scale is greater than the scale indicated by the maximum intra-frame prediction parameter in the key frame. The target block is decoded specifically for the fifth context model of the target block, which can further improve prediction accuracy of the target block and reduce decoding complexity.

For example, assuming that the video frame is the key frame, the scale of the target block is 256*256, the maximum intra-frame prediction parameter is 128 (or 64), and the indicated scale is 128*128 (or 64*64), the computer device performs quadtree division on the target block, or decodes the target block through the fifth context model.

In another implementation, the target block is the lower boundary block or the right boundary block of the video frame, and the computer device decodes the video frame based on the aspect ratio of the target block, and presents the video frame based on the decoding result. The right boundary block is a block at a right boundary of the video frame, and the lower boundary block is a block at a lower boundary of the video frame. FIG. 3 is a schematic diagram of a right boundary block and a lower boundary block according to an embodiment of the present disclosure. As shown in FIG. 3, an overlapping portion exists between the right boundary block and the right boundary of the video frame, and there is an overlapping portion between the lower boundary block and the lower boundary of the video frame.

In an embodiment, the target block is the right boundary block of the video frame. A process in which the computer device decodes the encoded data of the video frame includes the following. If a ratio of a height to a width of the target block is less than a first ratio threshold, the computer device performs vertical binary division on the target block, or the computer device may parse a division flag bit of the target block, and decodes the target block by using a sixth context model. Correspondingly, if the ratio of the height to the width of the target block is greater than or equal to the first ratio threshold, the computer device performs horizontal binary division on the target block, or the computer device may parse a division flag bit of the target block, and decodes the target block through a seventh context model. The sixth context model is specifically configured to decode the right boundary block whose ratio of the height to the width is less than the first ratio threshold in the video frame, and the seventh context model is specifically configured to decode the right boundary block whose ratio of the height to the width is greater than or equal to the first ratio threshold in the video frame. When the target block satisfies a condition, the target block is decoded through the dedicated sixth context model or the seventh context model, which can further improve prediction accuracy of the target block and reduce decoding complexity.

For example, assuming that the first ratio threshold is 8, the target block is the right boundary block of the video frame, and the scale (the width*the height) of the target block is 64*128, the ratio of the height to the width of the target block is 128/64=2<8, and the computer device performs vertical binary division on the target block, or decodes the target block through the sixth context model.

In an embodiment, the target block is the lower boundary block of the video frame. The process in which the computer device decodes the encoded data of the video frame includes the following. If the ratio of the width to the height of the target block is less than a second ratio threshold, the computer device performs horizontal binary division on the target block, or the computer device may parse a division flag bit of the target block, and decodes the target block through an eighth context model. Correspondingly, if the ratio of the width to the height of the target block is greater than or equal to the second ratio threshold, the computer device performs vertical binary division on the target block, or the computer device may parse the division flag bit of the target block, and decodes the target block through a ninth context model. The eighth context model is specifically configured to decode the lower boundary block whose ratio of the width to the height is less than the second ratio threshold in the video frame, and the ninth context model is specifically configured to decode the lower boundary block whose ratio of the width to the height is greater than or equal to the second ratio threshold in the video frame. When the target block satisfies a condition, the target block is decoded through the dedicated eighth context model or the ninth context model, which can further improve prediction accuracy of the target block and reduce decoding complexity.

For example, assuming that the second ratio threshold is 8, the target block is the lower boundary block of the video frame, and the scale (the width*the height) of the target block is 128*16, the ratio of the width to the height of the target block is 128/16=8≥8, and the computer device performs vertical binary division on the target block, or decodes the target block through a ninth context model.

In the embodiments of the present disclosure, the code stream data of the video frame is obtained, the code stream data including the encoded data of the video frame. The encoded data of the video frame is decoded based on a scale of a target block, and the video frame is presented, the target block being obtained by dividing the video frame, and the scale of the target block being configured for determining the encoding and decoding information of the target block. It may be seen that in a decoding process, the encoding and decoding information (for example, a manner of dividing the target block, and whether a residual exists) of the target block is determined through the scale of the target block, so that the video frame decoding process (for example, a division flag bit of the target block does not need to be parsed) can be optimized and decoding complexity is reduced, thereby improving the trade-off between encoding and decoding performance and complexity in the encoding and decoding process of the video frame.

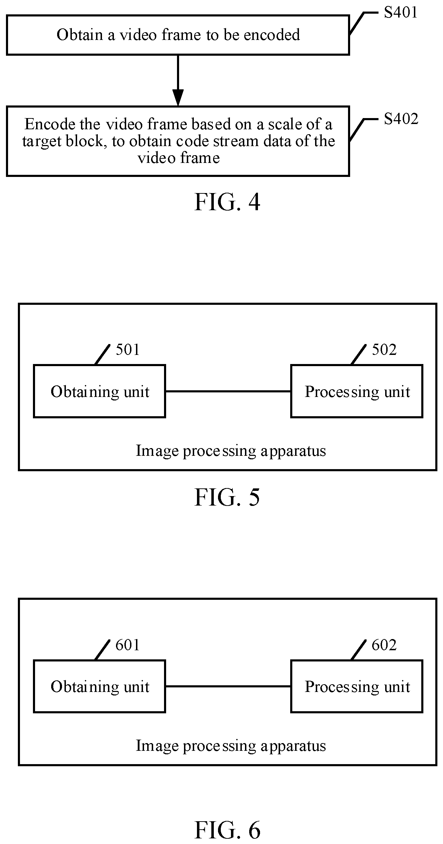

FIG. 4 is a flowchart of another image processing method according to an embodiment of the present disclosure. The image processing method may be performed by a computer device, for example, by the server 102 shown in FIG. 1d. As shown in FIG. 4, the image processing method may include operation S401 and operation S402 below.

S401: Obtain a video frame to be encoded.

S402: Encode the video frame based on a scale of a target block, to obtain code stream data of the video frame.

Specifically, the target block is obtained by dividing the video frame, and the scale of the target block is configured for determining encoding and decoding information of the target block. The target block may be a to-be-divided block (a block that needs to be further divided), or may be a CU (which does not need to be further divided). The encoding and decoding information of the target block may include at least one of the following: a manner of dividing the target block, a residual flag bit, and a predictive encoding mode. For example, when the target block is the to-be-divided block, the encoding and decoding information of the target block may include the manner of dividing the target block. When the target block is the CU, the encoding and decoding information of the target block may include the residual flag bit and the predictive encoding mode of the target block.

In an implementation, the computer device obtains a scale parameter of the video frame. The scale parameter is configured for optimizing an encoding and decoding process (for example, a manner of dividing the target block and determining whether a residual exists in the target block) of the target block. The scale parameter of the video frame may be a default value, or may be configured based on the video frame. In a video to which the video frame belongs, different types of video frames (for example, a key frame and a non-key frame) may have the same scale parameter or different scale parameters. For example, the scale parameter is a CTU parameter, and the key frame and the non-key frame in the video have different CTU parameters. The same type of video frames may have the same scale parameter or different scale parameters. The scale parameter of the video frame includes at least one of the following: a CTU parameter of the video frame, a maximum inter-frame transformation parameter of the video frame, or a maximum intra-frame prediction parameter of the video frame. After the scale parameter of the video frame is obtained, the computer device encodes the video frame based on the scale of the target block and the scale parameter, to obtain code stream data of the video frame.

If the scale parameter of the video frame is a default value, the computer device encodes the video frame based on the scale of the target block and the default value (a default scale parameter), to obtain the code stream data of the video frame. The default value is a parameter agreed on by an encoding device and a decoding device (the computer device) in advance, or is a parameter specified in an encoding and decoding standard, and does not need to be carried in the code stream data of the video frame.

If the scale parameter of the video frame is configured based on the video frame, the computer device encodes the video frame based on the scale of the target block and the scale parameter, to obtain encoded data of the video frame, the encoded data of the video frame including an image header of the video frame. After the encoded data of the video frame is obtained, according to an aspect, the computer device adds the encoded data of the video frame to a video sequence to which the video frame belongs. According to another aspect, the computer device adds the scale parameter of the video frame to the image header of the video frame, or configures a sequence header of the video sequence to which the video frame belongs based on the scale parameter of the video frame, to obtain the code stream data of the video frame. In an implementation, video frames belonging to the same video sequence have the same scale parameter. In this case, the sequence header may be configured once based on a scale parameter of a video frame in any video sequence.

The scale parameter of the video frame may also be partially configured through the default value, and partially configured based on the video frame. In an embodiment, the scale parameter includes a CTU parameter of the video frame, a maximum inter-frame transformation parameter of the video frame, and a maximum intra-frame prediction parameter of the video frame. The CTU parameter of the video frame is configured based on the video frame (included in the code stream data), and the maximum inter-frame transformation parameter of the video frame and the maximum intra-frame prediction parameter of the video frame use the default value. For example, the encoding device may configure the CTU parameter of the video frame to 256, and the CTU parameter is carried in the code stream data. In this case, the encoding and decoding device defaults that the maximum intra-frame prediction parameter of the key frame is 64, the maximum intra-frame prediction parameter of the non-key frame is 128 (namely, the key frame and the non-key frame have different maximum intra-frame prediction parameters), and the maximum inter-frame transformation parameter of the non-key frame is 128. When the maximum intra-frame prediction parameter of the key frame is the default value, the maximum intra-frame prediction parameter of the non-key frame and the maximum inter-frame transformation parameter of the non-key frame may not be carried in the code stream data. For another example, the encoding device may configure a CTU parameter of the video frame to 256, and the CTU parameter is carried in the code stream data. In this case, the encoding and decoding device defaults that the maximum intra-frame prediction parameter of the key frame is 64, the maximum intra-frame prediction parameter of the non-key frame is 64 (the key frame and the non-key frame have the same maximum intra-frame prediction parameter), the maximum inter-frame transformation parameter of the non-key frame is 128. When the maximum intra-frame prediction parameter of the key frame is the default value, the maximum intra-frame prediction parameter of the non-key frame and the maximum inter-frame transformation parameter of the non-key frame may not be carried in the code stream data.

The encoded data of the video frame is decoded through the default value (the default scale parameter) and the scale of the target block. Compared with decoding the encoded data of the video frame through the configured scale parameter and the scale of the target block, the scale parameter does not need to be indicated in the code stream data of the video frame (or to reduce a data volume of the scale parameter), and the data volume of the code stream data of the video frame is further compressed. When the scale parameter of the video frame is carried in the sequence header of the video sequence to which the video frame belongs, the scale parameter may be configured for indicating a scale of the video frame in the video sequence to which the video frame belongs. Compared with being carried in the image header of the video frame, the data volume of the code stream data may be further compressed. When the scale parameter is carried the image header of the video frame, a scale of a single video frame may be indicated. Compared with being carried in the sequence header, the scale parameter is more flexible.

In an embodiment, the scale parameter includes a CTU parameter corresponding to the video frame, and the CTU parameter is configured for exporting the encoded data of the video. The computer device determines the predictive encoding parameter of the video frame based on the CTU parameter and a preset ratio. The predictive encoding parameter includes at least one of the maximum inter-frame transformation parameter of the video frame and the maximum intra-frame prediction parameter of the video frame, the preset ratio being 1/N, and N being a positive integer. For the key frame and the non-key frame, the preset ratios corresponding to the maximum inter-frame transformation parameters may be different (namely, the maximum inter-frame transformation parameters of the key frame and the non-key frame obtained based on the CTU parameter and the preset ratios are different).

For example, assuming that N=4, the CTU is 256, the scale indicated by the CTU is 256*256, the predictive encoding parameter includes the maximum inter-frame transformation parameter of the video frame and the maximum intra-frame prediction parameter of the video frame, the preset ratio corresponding to the key frame is 1/4, and the preset ratio corresponding to the non-key frame is 1/2, the maximum intra-frame prediction parameter of the key frame is 256*1/4=64, and the scale indicated by the maximum intra-frame prediction parameter of the key frame is 64*64. The maximum intra-frame prediction parameter of the non-key frame is 256*1/2=128, the scale indicated by the maximum intra-frame prediction parameter of the non-key frame is 128*128, the maximum inter-frame transformation parameter of the non-key frame is 256*1/2=128, and the scale indicated by the maximum inter-frame transformation parameter of the non-key frame is 128*128. After the predictive encoding parameter of the video frame is obtained, the computer device encodes the encoded data of the video frame based on the scale of the target block and the predictive encoding parameter of the video frame, to obtain code stream data of the video frame.

In still another embodiment, the scale parameter includes the maximum intra-frame prediction parameter, the video frame is the non-key frame, and the target block is the CU. The process in which the computer device encodes the video frame based on the scale of the target block and the scale parameter to obtain the code stream data of the video frame includes the following. If the scale of the target block is greater than the scale indicated by the maximum intra-frame prediction parameter, the computer device determines that the predictive encoding mode of the target block is a non-intra-frame prediction (for example, using inter-frame prediction), or encodes the target block through the first context model. When the predictive encoding mode includes only the intra-frame prediction and the inter-frame prediction, the computer device may directly determine the predictive encoding mode of the target block as the inter-frame prediction. The first context model is specifically configured to encode a CU whose scale is greater than the scale indicated by the maximum intra-frame prediction parameter in the non-key frame. When the target block satisfies the condition, the target block is encoded through the dedicated first context model, which can further improve prediction accuracy of the target block and reduce decoding complexity.

For example, assuming that the video frame is the non-key frame, the target block is the CU, the scale of the target block is 256*256, the maximum intra-frame prediction parameter is 128, and the scale indicated by the maximum intra-frame prediction parameter is 128*128, the computer device determines that the predictive encoding mode of the target block is the non-intra-frame prediction, or encodes the target block through the first context model.

In another embodiment, the scale parameter includes the maximum inter-frame transformation parameter, the video frame is the non-key frame, and the target block is the to-be-divided block. The process in which the computer device encodes the video frame based on the scale of the target block and the scale parameter to obtain the code stream data of the video frame includes the following. If the height of the target block is greater than the height indicated by the maximum inter-frame transformation parameter and the width of the target block is less than or equal to the width indicated by the maximum inter-frame transformation parameter, the computer device performs horizontal binary division on the target block, or encodes the target block through a second context model. If the height of the target block is less than or equal to the height indicated by the maximum inter-frame transformation parameter and the width of the target block is greater than the width indicated by the maximum inter-frame transformation parameter, the computer device performs vertical binary division on the target block, or encodes the target block through a third context model. The second context model is specifically configured to decode a to-be-divided block whose height is greater than the height indicated by the maximum inter-frame transformation parameter and whose width is less than or equal to the width indicated by the maximum inter-frame transformation parameter. The third context model is specifically configured to decode a to-be-divided block whose height is less than a height indicated by the maximum inter-frame transformation parameter and whose width is greater than the width indicated by the maximum inter-frame transformation parameter. When the target block satisfies a condition, the target block is encoded through the dedicated second context model or the third context model, which can further improve prediction accuracy of the target block and reduce encoding complexity.

For example, assuming that the target block is the to-be-divided block, the video frame is the non-key frame, the scale (the width*the height) of the target block is 256*128, the maximum inter-frame transformation parameter is 128, and the scale (the width*the height) indicated by the maximum inter-frame transformation parameter is 128*128, namely, the width of the target block is greater than the width indicated by the maximum inter-frame transformation parameter, and the height of the target block is less than or equal to the height indicated by the maximum inter-frame transformation parameter, the computer device performs vertical binary division on the target block, or encodes the target block through the third context model.

In yet another embodiment, the scale parameter includes the maximum inter-frame transformation parameter, the target block is the CU, and the predictive encoding mode of the CU is the inter-frame prediction. The process in which the computer device encodes the video frame based on the scale of the target block and the scale parameter to obtain the code stream data of the video frame includes the following. If the scale of the target block is greater than the scale indicated by the maximum inter-frame transformation parameter, the computer device determines that the target block has no residual, or encodes the target block through the fourth context model. In this case, the computer device may configure the residual flag bit of the target block as null (or skip configuring the residual flag bit of the target block). The fourth context model is specifically configured to encode a CU whose predictive encoding mode is the inter-frame prediction and whose scale is greater than the scale indicated by the maximum inter-frame transformation parameter in the video frame. When the target block satisfies the condition, the target block is encoded through the dedicated fourth context model, which can further improve prediction accuracy of the target block and reduce encoding complexity.

For example, assuming that the target block is the CU, the predictive encoding mode of the CU is the inter-frame prediction, the scale of the target block is 256*256, the maximum inter-frame transformation parameter is 128, and the scale indicated by the maximum inter-frame transformation parameter is 128*128, the computer device determines that the target block has no residual, or encodes the target block through the fourth context model.

In another embodiment, the scale parameter includes the maximum intra-frame prediction parameter, and the video frame is the key frame. The process in which the computer device encodes the video frame based on the scale of the target block and the scale parameter to obtain the code stream data of the video frame includes the following. If the scale of the target block is greater than the scale indicated by the maximum intra-frame prediction parameter, the computer device divides the target block, or encodes the target block through the fifth context model. The division mode includes at least one of the binary division and the quadtree division. The fifth context model is specifically configured to encode a block whose scale is greater than the scale indicated by the maximum inter-frame transformation parameter in the key frame. When the target block satisfies the condition, the target block is encoded through the dedicated fifth context model, which can further improve prediction accuracy of the target block and reduce encoding complexity.

For example, assuming that the video frame is the key frame, the scale of the target block is 256*256, the maximum intra-frame prediction parameter is 128 (or 64), and the scale indicated by the maximum intra-frame prediction parameter is 128*128 (or 64*64), the computer device continues to divide the target block until the scale of the target block is not greater than the scale indicated by the maximum intra-frame prediction parameter, or encodes the target block through the fifth context model.

In another implementation, the target block is a right boundary block or a lower boundary block of the video frame, and the computer device encodes the video frame based on an aspect ratio of the target block, to obtain code stream data of the video frame. The right boundary block is a block at a right boundary of the video frame, and the lower boundary block is a block at a lower boundary of the video frame. For details, reference is made to FIG. 3.

In an embodiment, the target block is the right boundary block of the video frame. The process in which the computer device encodes the video frame based on the scale of the target block to obtain the code stream data of the video frame includes the following. If a ratio of the height to the width of the target block is less than a first ratio threshold, the computer device performs vertical binary division on the target block, or encodes the target block through a sixth context model. Correspondingly, if the ratio of the height to the width of the target block is greater than or equal to the first ratio threshold, the computer device performs horizontal binary division on the target block, or encodes the target block through a seventh context model. The first ratio threshold may be 2*^{M}*, M being a positive integer. The sixth context model is specifically configured to encode the right boundary block whose ratio of the height to the width is less than the first ratio threshold in the video frame, and the seventh context model is specifically configured to encode the right boundary block whose ratio of the height to the width is greater than or equal to the first ratio threshold in the video frame. When the target block satisfies the condition, the target block is encoded through the dedicated sixth context model or the seventh context model, which can further improve prediction accuracy of the target block and reduce encoding complexity.

For example, assuming that the first ratio threshold is 8, the target block is the right boundary block of the video frame, and the scale (the height*the width) of the target block is 128*64, the ratio of the height to the width of the target block is 128/64=2<8, and the computer device performs vertical binary division on the target block, or encodes the target block through the sixth context model.

In another embodiment, the target block is the lower boundary block of the video frame. The process in which the computer device encodes the video frame based on the scale of the target block to obtain the code stream data of the video frame includes the following. If a ratio of the width to the height of the target block is less than a second ratio threshold, the computer device performs horizontal binary division on the target block, or encodes the target block by using an eighth context model. Correspondingly, if the ratio of the width to the height of the target block is greater than or equal to the second ratio threshold, the computer device performs vertical binary division on the target block, or encodes the target block through the ninth context model. The second ratio threshold may be 2*^{M}*, M being a positive integer. The first ratio threshold may be the same as or different from the second ratio threshold. The eighth context model is specifically configured to decode the lower boundary block whose ratio of the width to the height is less than the second ratio threshold in the video frame. The ninth context model is specifically configured to encode the lower boundary block whose ratio of the width to the height is greater than or equal to the second ratio threshold in the video frame. When the target block satisfies the condition, the target block is encoded through the dedicated eighth context model or the ninth context model, which can further improve prediction accuracy of the target block and reduce encoding complexity.

For example, assuming that the second ratio threshold is 8, the target block is the lower boundary block of the video frame, and the scale (the width*the height) of the target block is 128*16, the ratio of the width to the height of the target block is 128/16=8≥8, and the computer device performs vertical binary division on the target block, or encodes the target block by using the ninth context model.

In yet another implementation, the target block is a basic CU in the video frame, and a coding process of the video frame involves calculation of a high-frequency coefficient and a low-frequency coefficient of each basic CU. The high-frequency coefficient is a coefficient of a high-frequency portion (whose frequency is greater than a frequency threshold) obtained after discrete sine and cosine transform, wavelet transform, or another transform of a signal or an image. The low-frequency coefficient is a coefficient of a low-frequency portion (whose frequency is less than or equal to the frequency threshold) obtained after wavelet decomposition or another transform of a signal or an image. A process in which the computer device encodes the video frame based on the scale of the target block and the scale parameter to obtain the code stream data of the video frame includes the following. The high-frequency coefficient that is greater than the high-frequency coefficient threshold is set to a preset value (for example, 0). For example, assuming that the high-frequency coefficient threshold is 32, and if a transform coefficient matrix is 64*64, the computer device may set coefficients in columns 32-63 and rows 32-63 of the transform coefficient matrix to 0 (namely, only coefficients having rows of 0-31 and columns of 0-31 in the transform coefficient matrix are reserved). In a process of calculating the transform coefficient, skipping calculation of the high-frequency coefficient that is greater than the high-frequency coefficient threshold (namely, the high-frequency coefficient that is greater than the high-frequency coefficient threshold is set to the preset value) may reduce encoding complexity of the encoding device (the computer device) and have less impact on picture quality of the video frame.

In the embodiments of the present disclosure, the video frame to be encoded is obtained, and the video frame is encoded based on the scale of the target block, to obtain the code stream data of the video frame, the target block being obtained by dividing the video frame, and the scale of the target block being configured for determining the encoding and decoding information of the target block. It may be seen that in an encoding process, the encoding and decoding information (for example, a manner of dividing the target block, and whether a residual exists) of the target block is determined through the scale of the target block, so that the video frame encoding process (for example, a division flag bit of the target block does not need to be configured) can be optimized and encoding complexity is reduced, thereby improving the trade-off between encoding and decoding performance and complexity in the encoding and decoding process of the video frame.

The method of the embodiments of the present disclosure is described in detail above. To better implement the foregoing solutions of the embodiments of the present disclosure, correspondingly, an apparatus of the embodiments of the present disclosure is provided below.

FIG. 5 is a schematic structural diagram of an image processing apparatus according to an embodiment of the present disclosure. The image processing apparatus shown in FIG. 5 may be installed in a computer device. The computer device may specifically be the terminal device 101 shown in FIG. 1d. The image processing apparatus shown in FIG. 5 may be configured to perform some or all of the functions in the method embodiment described in FIG. 2 above. Referring to FIG. 5, the image processing apparatus includes:
an obtaining unit 501, configured to obtain code stream data of a video frame, the code stream data including encoded data of the video frame; and
a processing unit 502, configured to decode the encoded data of the video frame based on a scale of a target block, and present the video frame, the target block being obtained by dividing the video frame, and the scale of the target block being configured for determining encoding and decoding information of the target block.

In an implementation, the processing unit 502 is configured to decode the encoded data of the video frame based on the scale of the target block, and is specifically configured to:
decode the encoded data of the video frame based on the scale and a scale parameter of the target block,
the scale parameter being configured for optimizing an encoding and decoding process of the target block, the scale parameter being a default value or being carried in the code stream data, and the scale parameter including at least one of a CTU parameter, a maximum inter-frame transformation parameter, or a maximum intra-frame prediction parameter.

In an implementation, the scale parameter includes a CTU parameter corresponding to the video frame, and the encoded data of the video frame is derived based on the CTU parameter. The processing unit 502 is configured to decode the encoded data of the video frame based on the scale of the target block and the scale parameter, and is specifically configured to:
determine a predictive encoding parameter of the video frame through the CTU parameter and a preset ratio; and
decode the encoded data of the video frame based on the scale of the target block and the predictive encoding parameter of the video frame,
the predictive encoding parameter including at least one of the maximum inter-frame transformation parameter of the video frame and a maximum intra-frame prediction parameter of the video frame.

In an implementation, the scale parameter includes a maximum intra-frame prediction parameter, the video frame is a non-key frame, and the target block is a CU. The process of decoding, by the processing unit 502, the encoded data of the video frame based on the scale of the target block and the scale parameter includes:
determining that a predictive encoding mode of the target block is non-intra-frame prediction, or decoding the target block through a first context model if the scale of the target block is greater than a scale indicated by the maximum intra-frame prediction parameter.

In an implementation, the scale parameter includes a maximum inter-frame transformation parameter, the video frame is a non-key frame, and the target block is a to-be-divided block. The process of decoding, by the processing unit 502, the encoded data of the video frame based on the scale of the target block and the scale parameter includes:
performing horizontal binary division on the target block, or decoding the target block through a second context model if a height of the target block is greater than a height indicated by the maximum inter-frame transformation parameter, and a width of the target block is less than or equal to a width indicated by the maximum inter-frame transformation parameter; and
performing vertical binary division on the target block, or decoding the target block through a third context model if the height of the target block is less than or equal to the height indicated by the maximum inter-frame transformation parameter, and the width of the target block is greater than the width indicated by the maximum inter-frame transformation parameter.

In an implementation, the scale parameter includes the maximum inter-frame transformation parameter, the target block is the CU, and the predictive encoding mode of the CU is the inter-frame prediction. The process of decoding, by the processing unit 502, the encoded data of the video frame based on the scale of the target block and the scale parameter includes:
determining that the target block has no residual, or decoding the target block through a fourth context model if the scale of the target block is greater than a scale indicated by the maximum inter-frame transformation parameter.

In an implementation, the scale parameter includes the maximum intra-frame prediction parameter, and the video frame is the key frame. The process of decoding, by the processing unit 502, the encoded data of the video frame based on the scale of the target block and the scale parameter includes:
performing quadtree division on the target block, or decoding the target block through a fifth context model if the scale of the target block is greater than a scale indicated by the maximum intra-frame prediction parameter.

In an implementation, the code stream data includes at least one video sequence of a video to which the video frame belongs, each video sequence including encoded data of at least one video frame, and encoded data of any video frame including an image header of the video frame;
the scale parameter of the video frame is carried in a sequence header of a video sequence to which the video frame belongs, or in the image header of the video frame; and
the video includes a key frame and a non-key frame, scale parameters of the key frame and the non-key frame being different.

In an implementation, the target block is the right boundary block of the video frame. The process of decoding, by the processing unit 502, the encoded data of the video frame based on the scale of the target block includes:
performing vertical binary division on the target block, or decoding the target block through a sixth context model if a ratio of a height to a width of the target block is less than a first ratio threshold; and
performing horizontal binary division on the target block, or decoding the target block through a seventh context model if the ratio of the height to the width of the target block is greater than or equal to the first ratio threshold.

In an implementation, the target block is the lower boundary block of the video frame, and the process of decoding, by the processing unit 502, the encoded data of the video frame based on attribute information of the target block includes:
performing horizontal binary division on the target block, or decoding the target block through an eighth context model if a ratio of a width to a height of the target block is less than a second ratio threshold; and
performing vertical binary division on the target block, or decoding the target block through a ninth context model if the ratio of the width to the height of the target block is greater than or equal to the second ratio threshold.

According to an embodiment of the present disclosure, some operations involved in the image processing method shown in FIG. 2 may be performed by the units in the image processing apparatus shown in FIG. 5. For example, operation S201 shown in FIG. 2 may be performed by the obtaining unit 501 shown in FIG. 5, and operation S202 may be performed by the processing unit 502 shown in FIG. 5. The units in the image processing apparatus shown in FIG. 5 may be separately or all combined into one or several additional units, or one (some) of the units may further be split into a plurality of units with smaller functions, so as to realize the same operation without affecting the implementation of the technical effects of the embodiments of the present disclosure. The foregoing units are divided based on logical functions. In actual application, functions of one unit may also be implemented by a plurality of units, or the functions of the plurality of units may be implemented by one unit. In another embodiment of the present disclosure, the image processing apparatus may further include another unit. In practical application, these functions may also be implemented with the assistance of other units, and may be implemented with the assistance of a plurality of units.

According to another embodiment of the present disclosure, a computer program (including program code) that can perform the operations involved in the corresponding methods shown in FIG. 2 may be run on a general-purpose computing apparatus such as a computer device including processing elements such as a central processing unit (CPU) and storage elements such as a random access storage medium (RAM) and a read-only storage medium (ROM), to construct the image processing apparatus shown in FIG. 5 and implement the image processing method in the embodiments of the present disclosure. The computer program may be recorded in, for example, a computer-readable recording medium, and may be loaded into the computing apparatus through a computer-readable recording medium and run in the computing apparatus.

Based on the same inventive concept, the principles and the beneficial effects of the image processing apparatus provided in the embodiments of the present disclosure in solving the problems are similar to the principles and the beneficial effects of the image processing method of the method embodiments of the present disclosure in solving the problems. Reference may be made to the principles and the beneficial effects of the implementation of the method. For brevity, details are not described herein again.

FIG. 6 is a schematic structural diagram of another image processing apparatus according to an embodiment of the present disclosure. The image processing apparatus shown in FIG. 6 may be installed in a computer device. The computer device may specifically be the server 102 shown in FIG. 1d. The image processing apparatus shown in FIG. 6 may be configured to perform some or all of the functions in the method embodiment described in FIG. 4 above. Referring to FIG. 6, the image processing apparatus includes:
an obtaining unit 601, configured to obtain a video frame to be encoded; and
a processing unit 602, configured to encode the video frame based on a scale of a target block, to obtain code stream data of the video frame, the target block being obtained by dividing the video frame, and the scale of the target block being configured for determining encoding and decoding information of the target block.

In an implementation, the processing unit 602 is configured to encode the video frame based on a scale of a target block, to obtain code stream data of the video frame, and is specifically configured to:
obtain a scale parameter of the video frame, the scale parameter being configured for optimizing an encoding and decoding process of the target block, the scale parameter being a default value or being configured based on the video frame, and the scale parameter including at least one of the following: a CTU parameter, a maximum inter-frame transformation parameter, or a maximum intra-frame prediction parameter; and
encode the video frame based on the scale of the target block and the scale parameter, to obtain the code stream data of the video frame.

In an implementation, the scale parameter includes a CTU parameter corresponding to the video frame, and the CTU parameter is configured for exporting the encoded data of the video. The process of encoding, by the processing unit 602, the video frame based on the scale of the target block and the scale parameter includes:
determining a predictive encoding parameter of the video frame based on the CTU parameter and a preset ratio,
the predictive encoding parameter including at least one of the maximum inter-frame transformation parameter of the video frame and a maximum intra-frame prediction parameter of the video frame.

In an implementation, the scale parameter includes the maximum intra-frame prediction parameter, the video frame is the non-key frame, and the target block is the CU. The process of encoding, by the processing unit 602, the video frame based on the scale of the target block and the scale parameter to obtain code stream data of the video frame includes:
determining that a predictive encoding mode of the target block is non-intra-frame prediction, or encoding the target block through a first context model if the scale of the target block is greater than a scale indicated by the maximum intra-frame prediction parameter.

In an implementation, the scale parameter includes the maximum inter-frame transformation parameter, the video frame is the non-key frame, and the target block is the to-be-divided block. The process of encoding, by the processing unit 602, the video frame based on the scale of the target block and the scale parameter to obtain code stream data of the video frame includes:
performing horizontal binary division on the target block, or encoding the target block through a second context model if a height of the target block is greater than a height indicated by the maximum inter-frame transformation parameter, and a width of the target block is less than or equal to a width indicated by the maximum inter-frame transformation parameter; and
performing vertical binary division on the target block, or encoding the target block through a third context model if the height of the target block is less than or equal to the height indicated by the maximum inter-frame transformation parameter, and the width of the target block is greater than the width indicated by the maximum inter-frame transformation parameter.

In an implementation, the scale parameter includes the maximum inter-frame transformation parameter, the target block is the CU, and the predictive encoding mode of the CU is the inter-frame prediction. The process of encoding, by the processing unit 602, the video frame based on the scale of the target block and the scale parameter to obtain code stream data of the video frame includes:
determining that the target block has no residual, or encoding the target block through a fourth context model if the scale of the target block is greater than a scale indicated by the maximum inter-frame transformation parameter.

In an implementation, the scale parameter includes the maximum intra-frame prediction parameter, and the video frame is the key frame. The process of encoding, by the processing unit 602, the video frame based on the scale of the target block and the scale parameter to obtain code stream data of the video frame includes:
dividing the target block, or encoding the target block through a fifth context model if the scale of the target block is greater than a scale indicated by the maximum intra-frame prediction parameter, a manner of the division including at least one of binary division and quadtree division.

In an implementation, the scale parameter is configured based on the video frame. The process of encoding, by the processing unit 602, the video frame based on the scale of the target block and the scale parameter to obtain code stream data of the video frame includes:
configuring a sequence header of a video sequence to which the video frame belongs based on the scale parameter, or adding the scale parameter to an image header of the video frame,
the video including a key frame and a non-key frame, scale parameters of the key frame and the non-key frame being different.

In an implementation, the target block is a right boundary block of the video frame, and the process of encoding, by the processing unit 602, the video frame based on the scale of the target block to obtain code stream data of the video frame includes:
performing vertical binary division on the target block, or encoding the target block through a sixth context model if a ratio of a height to a width of the target block is less than a first ratio threshold; and
performing horizontal binary division on the target block, or encoding the target block through a seventh context model if the ratio of the height to the width of the target block is greater than or equal to the first ratio threshold.

In an implementation, the target block is the lower boundary block of the video frame, and the process of encoding, by the processing unit 602, the video frame based on the scale of the target block to obtain code stream data of the video frame includes:
performing horizontal binary division on the target block, or encoding the target block through an eighth context model if a ratio of a width to a height of the target block is less than a second ratio threshold; and
performing vertical binary division on the target block, or encoding the target block through a ninth context model if the ratio of the width to the height of the target block is greater than or equal to the second ratio threshold.

In an implementation, the process of encoding, by the processing unit 602, the video frame based on the scale of the target block to obtain code stream data of the video frame includes:
setting, to a preset value, a high-frequency coefficient that is greater than a high-frequency coefficient threshold.

According to an embodiment of the present disclosure, some operations involved in the image processing method shown in FIG. 4 may be performed by the units in the image processing apparatus shown in FIG. 6. For example, operation S401 shown in FIG. 4 may be performed by the obtaining unit 601 shown in FIG. 6, and operation S402 may be performed by the processing unit 602 shown in FIG. 6. The units in the image processing apparatus shown in FIG. 6 may be separately or all combined into one or several additional units, or one (some) of the units may further be split into a plurality of units with smaller functions, so as to realize the same operation without affecting the implementation of the technical effects of the embodiments of the present disclosure. The foregoing units are divided based on logical functions. In actual application, functions of one unit may also be implemented by a plurality of units, or the functions of the plurality of units may be implemented by one unit. In another embodiment of the present disclosure, the image processing apparatus may further include another unit. In practical application, these functions may also be implemented with the assistance of other units, and may be implemented with the assistance of a plurality of units.

According to another embodiment of the present disclosure, a computer program (including program code) that can perform the operations involved in the corresponding methods shown in FIG. 4 may be run on a general-purpose computing apparatus such as a computer device including processing elements and storage elements such as a CPU, a random access storage medium (RAM), and a read-only storage medium (ROM), to construct the image processing apparatus shown in FIG. 6 and implement the image processing method in the embodiments of the present disclosure. The computer program may be recorded in, for example, a computer-readable recording medium, and may be loaded into the computing apparatus through a computer-readable recording medium and run in the computing apparatus.

Based on the same inventive concept, the principles and the beneficial effects of the image processing apparatus provided in the embodiments of the present disclosure in solving the problems are similar to the principles and the beneficial effects of the image processing method of the method embodiments of the present disclosure in solving the problems. Reference may be made to the principles and the beneficial effects of the implementation of the method. For brevity, details are not described herein again.

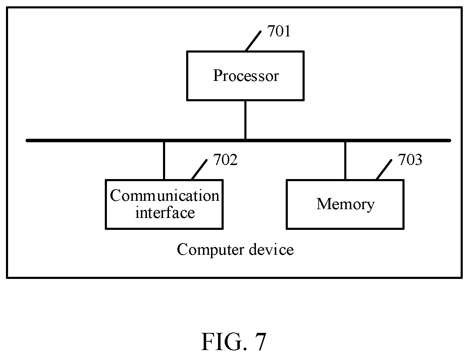

FIG. 7 is a schematic structural diagram of a computer device according to an embodiment of the present disclosure. The computer device may be a terminal device or a server. As shown in FIG. 7, the computer device includes at least a processor 701, a communication interface 702, and a memory 703. The processor 701, the communication interface 702, and the memory 703 may be connected through a bus or in another manner. The processor 701 (or referred to as the CPU) is computing core and a control core of the computer device, which can parse various instructions in the computer device and process various data of the computer device. For example, the CPU may be configured to parse an on/off instruction transmitted by an object to the computer device, and control the computer device to perform an on/off operation. For another example, the CPU may transfer various types of interactive data between internal structures of the computer device. In some embodiments, the communication interface 702 may include a standard wired interface and a standard wireless interface (for example, a Wi-Fi interface and a mobile communication interface), and may be controlled by the processor 701 to transmit and receive data. The communication interface 702 may further be configured for data transmission and interaction within the computer device. The memory 703 is a memory device in the computer device, which is configured to store a program and data. The memory 703 herein may include a built-in memory of the computer device, and certainly, may also include an extended memory supported by the computer device. The memory 703 provides a storage space. The storage space stores an operating system of the computer device. The operating system may include but is not limited to an Android system, an iOS system, a Windows Phone system, and the like, which is not limited in the present disclosure.

An embodiment of the present disclosure further provides a computer-readable storage medium (memory). The computer-readable storage medium is a memory device in a computer device, which is configured to store a program and data. The computer-readable storage medium herein may include a built-in storage medium in the computer device, and certainly, may also include an extended storage medium supported by the computer device. The computer-readable storage medium provides a storage space. The storage space has a processing system of the computer device stored therein. In addition, a computer program adapted to be loaded and executed by the processor 701 is further stored in the storage space. The computer-readable storage medium herein may be a high-speed RAM memory, or may be a non-volatile memory, for example, at least one magnetic disk memory. In some embodiments, the computer-readable storage medium may further be at least one computer-readable storage medium away from the foregoing processor.

In an embodiment, the computer device is a decoding device, and the processor 701 performs the following operations by running the computer program in the memory 703:
obtaining code stream data of a video frame, the code stream data including encoded data of the video frame; and
decoding the encoded data of the video frame based on a scale of a target block, and presenting the video frame, the target block being obtained by dividing the video frame, and the scale of the target block being configured for determining encoding and decoding information of the target block.

In an exemplary embodiment, a specific embodiment in which the processor 701 decodes the encoded data of the video frame based on the scale and the scale of the target block is:
decoding the encoded data of the video frame based on the scale and a scale parameter of the target block,
the scale parameter being configured for optimizing an encoding and decoding process of the target block, the scale parameter being a default value or being carried in the code stream data, and the scale parameter including at least one of a CTU parameter, a maximum inter-frame transformation parameter, or a maximum intra-frame prediction parameter.

In an exemplary embodiment, the scale parameter includes a CTU parameter corresponding to the video frame, and the encoded data of the video frame is derived based on the CTU parameter. A specific embodiment in which the processor 701 decodes the encoded data of the video frame based on the scale of the target block and the scale parameter is:
determining a predictive encoding parameter of the video frame through the CTU parameter and a preset ratio; and
decoding the encoded data of the video frame based on the scale of the target block and the predictive encoding parameter of the video frame,
the predictive encoding parameter including at least one of the maximum inter-frame transformation parameter of the video frame and a maximum intra-frame prediction parameter of the video frame.

In an exemplary embodiment, the scale parameter includes the maximum intra-frame prediction parameter, the video frame is the non-key frame, and the target block is the CU. The process of decoding, by the processor 701, the encoded data of the video frame based on the scale of the target block and the scale parameter includes:
determining that a predictive encoding mode of the target block is non-intra-frame prediction, or decoding the target block through a first context model if the scale of the target block is greater than a scale indicated by the maximum intra-frame prediction parameter.

In an exemplary embodiment, the scale parameter includes the maximum inter-frame transformation parameter, the video frame is the non-key frame, and the target block is the to-be-divided block. The process of decoding, by the processor 701, the encoded data of the video frame based on the scale of the target block and the scale parameter includes:
performing horizontal binary division on the target block, or decoding the target block through a second context model if a height of the target block is greater than a height indicated by the maximum inter-frame transformation parameter, and a width of the target block is less than or equal to a width indicated by the maximum inter-frame transformation parameter; and
performing vertical binary division on the target block, or decoding the target block through a third context model if the height of the target block is less than or equal to the height indicated by the maximum inter-frame transformation parameter, and the width of the target block is greater than the width indicated by the maximum inter-frame transformation parameter.

In an exemplary embodiment, the scale parameter includes the maximum inter-frame transformation parameter, the target block is the CU, and the predictive encoding mode of the CU is the inter-frame prediction. The process of decoding, by the processor 701, the encoded data of the video frame based on the scale of the target block and the scale parameter includes:
determining that the target block has no residual, or decoding the target block through a fourth context model if the scale of the target block is greater than a scale indicated by the maximum inter-frame transformation parameter.

In an exemplary embodiment, the scale parameter includes the maximum intra-frame prediction parameter, and the video frame is the key frame. The process of decoding, by the processor 701, the encoded data of the video frame based on the scale of the target block and the scale parameter includes:
performing quadtree division on the target block, or decoding the target block through a fifth context model if the scale of the target block is greater than a scale indicated by the maximum intra-frame prediction parameter.

In an exemplary embodiment, the code stream data includes at least one video sequence of a video to which the video frame belongs, each video sequence including encoded data of at least one video frame, and the encoded data of any video frame including an image header of the video frame;
the scale parameter of the video frame is carried in a sequence header of a video sequence to which the video frame belongs, or in the image header of the video frame; and
the video includes a key frame and a non-key frame, scale parameters of the key frame and the non-key frame being different.

In an exemplary embodiment, the target block is the right boundary block of the video frame, and the process of decoding, by the processor 701, the encoded data of the video frame based on the scale of the target block includes:
performing vertical binary division on the target block, or decoding the target block through a sixth context model if a ratio of a height to a width of the target block is less than a first ratio threshold; and
performing horizontal binary division on the target block, or decoding the target block through a seventh context model if the ratio of the height to the width of the target block is greater than or equal to the first ratio threshold.

In an exemplary embodiment, the target block is the lower boundary block of the video frame, and the process of decoding, by the processor 701, the encoded data of the video frame based on the attribute information of the target block includes:
performing horizontal binary division on the target block, or decoding the target block through an eighth context model if a ratio of a width to a height of the target block is less than a second ratio threshold; and
performing vertical binary division on the target block, or decoding the target block through a ninth context model if the ratio of the width to the height of the target block is greater than or equal to the second ratio threshold.

In an embodiment, the computer device is the encoding device. The processor 701 performs the following operations by running the computer program in the memory 703:
obtaining a video frame to be encoded; and
encoding the video frame based on a scale of a target block, to obtain code stream data of the video frame, the target block being obtained by dividing the video frame, and the scale of the target block being configured for determining encoding and decoding information of the target block.

In an exemplary embodiment, a specific embodiment in which the processor 701 encodes the video frame based on the scale of the target block to obtain code stream data of the video frame is:
obtaining a scale parameter of the video frame, the scale parameter being configured for optimizing an encoding and decoding process of the target block, the scale parameter being a default value or being configured based on the video frame, and the scale parameter including at least one of the following: a CTU parameter, a maximum inter-frame transformation parameter, or a maximum intra-frame prediction parameter; and
encoding the video frame based on the scale of the target block and the scale parameter, to obtain the code stream data of the video frame.

In an exemplary embodiment, the scale parameter includes the CTU parameter corresponding to the video frame, and the CTU parameter is configured for exporting the encoded data of the video. The process of encoding, by the processor 701, the video frame based on the scale of the target block and the scale parameter includes:
determining a predictive encoding parameter of the video frame based on the CTU parameter and a preset ratio,
the predictive encoding parameter including at least one of the maximum inter-frame transformation parameter of the video frame and a maximum intra-frame prediction parameter of the video frame.

In an exemplary embodiment, the scale parameter includes the maximum intra-frame prediction parameter, the video frame is the non-key frame, and the target block is the CU. The process of encoding, by the processor 701, the video frame based on the scale of the target block and the scale parameter to obtain code stream data of the video frame includes:
determining that a predictive encoding mode of the target block is non-intra-frame prediction, or encoding the target block through a first context model if the scale of the target block is greater than a scale indicated by the maximum intra-frame prediction parameter.

In an exemplary implementation, the scale parameter includes the maximum inter-frame transformation parameter, the video frame is the non-key frame, and the target block is the to-be-divided block. The process of encoding, by the processor 701, the video frame based on the scale of the target block and the scale parameter to obtain code stream data of the video frame includes:
performing horizontal binary division on the target block, or encoding the target block through a second context model if a height of the target block is greater than a height indicated by the maximum inter-frame transformation parameter, and a width of the target block is less than or equal to a width indicated by the maximum inter-frame transformation parameter; and
performing vertical binary division on the target block, or encoding the target block through a third context model if the height of the target block is less than or equal to the height indicated by the maximum inter-frame transformation parameter, and the width of the target block is greater than the width indicated by the maximum inter-frame transformation parameter.

In an exemplary implementation, the scale parameter includes the maximum inter-frame transformation parameter, the target block is the CU, and the predictive encoding mode of the CU is the inter-frame prediction. The process of encoding, by the processor 701, the video frame based on the scale of the target block and the scale parameter to obtain code stream data of the video frame includes:
determining that the target block has no residual, or encoding the target block through a fourth context model if the scale of the target block is greater than a scale indicated by the maximum inter-frame transformation parameter.

In an exemplary implementation, the scale parameter includes the maximum intra-frame prediction parameter, and the video frame is the key frame. The process of encoding, by the processor 701, the video frame based on the scale of the target block and the scale parameter to obtain code stream data of the video frame includes:
dividing the target block, or encoding the target block through a fifth context model if the scale of the target block is greater than a scale indicated by the maximum intra-frame prediction parameter, a manner of the division including at least one of binary division and quadtree division.

In an exemplary implementation, the scale parameter is configured based on the video frame. The process of encoding, by the processor 701, the video frame based on the scale of the target block and the scale parameter to obtain code stream data of the video frame includes:
configuring a sequence header of a video sequence to which the video frame belongs based on the scale parameter, or adding the scale parameter to an image header of the video frame,
the video including a key frame and a non-key frame, scale parameters of the key frame and the non-key frame being different.

In an exemplary implementation, the target block is the right boundary block of the video frame, and the process of encoding, by the processor 701, the video frame based on the scale of the target block to obtain code stream data of the video frame includes:
performing vertical binary division on the target block, or encoding the target block through a sixth context model if a ratio of a height to a width of the target block is less than a first ratio threshold; and
performing horizontal binary division on the target block, or encoding the target block through a seventh context model if the ratio of the height to the width of the target block is greater than or equal to the first ratio threshold.

In an exemplary implementation, the target block is the lower boundary block of the video frame, and the process of encoding, by the processor 701, the video frame based on the scale of the target block to obtain code stream data of the video frame includes:
performing horizontal binary division on the target block, or encoding the target block through an eighth context model if a ratio of a width to a height of the target block is less than a second ratio threshold; and
performing vertical binary division on the target block, or encoding the target block through a ninth context model if the ratio of the width to the height of the target block is greater than or equal to the second ratio threshold.

In an exemplary implementation, the process of encoding, by the processor 701, the video frame based on the scale of the target block to obtain code stream data of the video frame includes:
setting, to a preset value, a high-frequency coefficient that is greater than a high-frequency coefficient threshold.

Based on the same inventive concept, the principles and the beneficial effects of the computer device provided in the embodiments of the present disclosure in solving the problems are similar to the principles and the beneficial effects of the image processing method of the method embodiments of the present disclosure in solving the problems. Reference may be made to the principles and the beneficial effects of the implementation of the method. For brevity, details are not described herein again.

An embodiment of the present disclosure further provides a computer-readable storage medium, having a computer program stored therein, the computer program being loaded and executed by a processor to implement the image processing method in the foregoing method embodiments.

An embodiment of the present disclosure further provides a computer program product or a computer program, the computer program product or the computer program including a computer instruction, the computer instruction being stored in a computer-readable storage medium. A processor of a computer device reads the computer instruction from the computer-readable storage medium, and the processor executes the computer instruction, so that the computer device performs the foregoing image processing method.

The operations of the method of the embodiments of the present disclosure may be reordered, merged, and deleted based on an actual need.

The modules of the apparatus of the embodiments of the present disclosure may be merged, divided, and deleted based on an actual need.

In the embodiments of the present disclosure, an involved term "module" or "unit" refers to a computer program having a predetermined function or a part of a computer program, and operates together with other relevant parts to achieve a predetermined objective, and may be all or partially implemented by using software, hardware (such as a processing circuit or a memory), or a combination thereof. Similarly, one processor (or a plurality of processors or memories) may be configured to implement one or more modules or units. In addition, each module or unit may be a part of an overall module or unit including a function of the module or unit.

A person skilled in the art may understand that all or some of the operations of the various methods in the foregoing embodiments may be completed by instructing related hardware through a program. The program may be stored in a computer-readable storage medium, and the computer-readable storage medium may include: a flash drive, a read-only memory (ROM), a random access memory (RAM), a magnetic disk, an optical disc, or the like.

The contents disclosed above are merely exemplary embodiments of the present disclosure, and certainly is not intended to limit the scope of the claims of the present disclosure. A person of ordinary skill in the art may understand all or part of the processes for implementing the foregoing embodiments, and an equivalent change made according to the claims of the present disclosure still falls within the scope covered by the present disclosure.

## Claims

1. An image processing method, comprising:
obtaining code stream data of a video frame, the code stream data comprising encoded data of the video frame; and
decoding the encoded data of the video frame based on a scale of a target block, and presenting the video frame, the target block being obtained by dividing the video frame, and the scale of the target block being configured for determining encoding and decoding information of the target block.

2. The method according to claim 1, wherein decoding the encoded data of the video frame based on the scale of the target block comprises:
decoding the encoded data of the video frame based on the scale and a scale parameter of the target block,
wherein:
the scale parameter is configured for optimizing an encoding and decoding process of the target block,
the scale parameter is a default value or is carried in the code stream data, and
the scale parameter comprises at least one of a coding tree unit, CTU, parameter, a maximum inter-frame transformation parameter, or a maximum intra-frame prediction parameter.

3. The method according to claim 2, wherein:
the scale parameter comprises the CTU parameter corresponding to the video frame,
the encoded data of the video frame is derived based on the CTU parameter, and
decoding the encoded data of the video frame based on the scale and the scale parameter of the target block comprises:
determining a predictive encoding parameter of the video frame through the CTU parameter and a preset ratio; and
decoding the encoded data of the video frame based on the scale of the target block and the predictive encoding parameter of the video frame,
wherein the predictive encoding parameter comprises at least one of the maximum inter-frame transformation parameter of the video frame and the maximum intra-frame prediction parameter of the video frame.

4. The method according to claim 2, wherein:
the scale parameter comprises the maximum intra-frame prediction parameter,
the video frame is a non-key frame,
the target block is a coding unit, CU, and
the decoding the encoded data of the video frame based on the scale and the scale parameter of the target block comprises:
in response to the scale of the target block being greater than a scale indicated by the maximum intra-frame prediction parameter, determining that a predictive encoding mode of the target block is non-intra-frame prediction, or decoding the target block through a first context model.

5. The method according to claim 2, wherein:
the scale parameter comprises the maximum inter-frame transformation parameter,
the video frame is a non-key frame,
the target block is a to-be-divided block, and
the decoding the encoded data of the video frame based on the scale and the scale parameter of the target block comprises:
in response to a height of the target block being greater than a height indicated by the maximum inter-frame transformation parameter and a width of the target block being less than or equal to a width indicated by the maximum inter-frame transformation parameter, performing horizontal binary division on the target block, or decoding the target block through a second context model; and
in response to the height of the target block being less than or equal to the height indicated by the maximum inter-frame transformation parameter and the width of the target block being greater than the width indicated by the maximum inter-frame transformation parameter, performing vertical binary division on the target block, or decoding the target block through a third context model.

6. The method according to claim 2, wherein:
the scale parameter comprises the maximum inter-frame transformation parameter,
the target block is a CU,
a predictive encoding mode of the CU is inter-frame prediction, and
the decoding the encoded data of the video frame based on the scale and the scale parameter of the target block comprises:
in response to the scale of the target block being greater than a scale indicated by the maximum inter-frame transformation parameter, determining that the target block has no residual, or decoding the target block through a fourth context model.

7. The method according to claim 2, wherein:
the scale parameter comprises the maximum intra-frame prediction parameter,
the video frame is a key frame, and
the decoding the encoded data of the video frame based on the scale and the scale parameter of the target block comprises:
in response to the scale of the target block being greater than a scale indicated by the maximum intra-frame prediction parameter, performing quadtree division on the target block, or decoding the target block through a fifth context model.

8. The method according to claim 2, wherein:
the code stream data comprises at least one video sequence of a video to which the video frame belongs, each video sequence comprising encoded data of at least one video frame, and the encoded data of any video frame comprising an image header of the video frame;
the scale parameter of the video frame is comprised in a sequence header of a video sequence to which the video frame belongs, or in the image header of the video frame; and
the video comprises a key frame and a non-key frame, scale parameters of the key frame and the non-key frame being different.

9. The method according to claim 1, wherein:
the target block is a right boundary block of the video frame, and
the decoding the encoded data of the video frame based on a scale of a target block comprises:
in response to a ratio of a height to a width of the target block being less than a first ratio threshold, performing vertical binary division on the target block, or decoding the target block through a sixth context model; and
in response to the ratio of the height to the width of the target block being greater than or equal to the first ratio threshold, performing horizontal binary division on the target block, or decoding the target block through a seventh context model.

10. The method according to claim 1, wherein:
the target block is a lower boundary block of the video frame, and
the decoding the encoded data of the video frame based on a scale of a target block comprises:
in response to a ratio of a width to a height of the target block being less than a second ratio threshold, performing horizontal binary division on the target block, or decoding the target block through an eighth context model; and
in response to the ratio of the width to the height of the target block being greater than or equal to the second ratio threshold, performing vertical binary division on the target block, or decoding the target block through a ninth context model.

11. An image processing method, comprising:
obtaining a video frame to be encoded; and
encoding the video frame based on a scale of a target block, to obtain code stream data of the video frame, the target block being obtained by dividing the video frame, and the scale of the target block being configured for determining encoding and decoding information of the target block.

12. The method according to claim 11, wherein encoding the video frame based on a scale of a target block, to obtain code stream data of the video frame comprises:
obtaining a scale parameter of the video frame, the scale parameter being configured for optimizing an encoding and decoding process of the target block, the scale parameter being a default value or is carried in the code stream data, and the scale parameter comprises at least one of a coding tree unit, CTU, parameter, a maximum inter-frame transformation parameter, or a maximum intra-frame prediction parameter; and
encoding the video frame based on the scale of the target block and the scale parameter, to obtain the code stream data of the video frame.

13. The method according to claim 12, wherein the scale parameter comprises the CTU parameter corresponding to the video frame, the CTU parameter being configured for exporting encoded data of a video, and the encoding the video frame based on the scale of the target block and the scale parameter comprises:
determining a predictive encoding parameter of the video frame through the CTU parameter and a preset ratio,
the predictive encoding parameter comprising at least one of the maximum inter-frame transformation parameter of the video frame and a maximum intra-frame prediction parameter of the video frame.

14. The method according to claim 12, wherein the scale parameter comprises the maximum intra-frame prediction parameter, the video frame is a non-key frame, the target block is a coding unit, CU, and the encoding the video frame based on the scale of the target block and the scale parameter comprises:
determining that a predictive encoding mode of the target block is non-intra-frame prediction, or encoding the target block through a first context model if the scale of the target block is greater than a scale indicated by the maximum intra-frame prediction parameter.

15. The method according to claim 12, wherein the scale parameter comprises the maximum inter-frame transformation parameter, the video frame is a non-key frame, the target block is a to-be-divided block, and the encoding the video frame based on the scale of the target block and the scale parameter comprises:
performing horizontal binary division on the target block, or encoding the target block through a second context model if a height of the target block is greater than a height indicated by the maximum inter-frame transformation parameter, and a width of the target block is less than or equal to a width indicated by the maximum inter-frame transformation parameter; and
performing vertical binary division on the target block, or encoding the target block through a third context model if the height of the target block is less than or equal to the height indicated by the maximum inter-frame transformation parameter, and the width of the target block is greater than the width indicated by the maximum inter-frame transformation parameter.

16. The method according to claim 12, wherein the scale parameter comprises the maximum inter-frame transformation parameter, the target block is a CU, a predictive encoding mode of the CU is inter-frame prediction, and the encoding the video frame based on the scale of the target block and the scale parameter comprises:
determining that the target block has no residual, or encoding the target block through a fourth context model if the scale of the target block is greater than a scale indicated by the maximum inter-frame transformation parameter.

17. The method according to claim 12, wherein the scale parameter comprises the maximum intra-frame prediction parameter, the video frame is a key frame, and the encoding the video frame based on the scale of the target block and the scale parameter comprises:
dividing the target block, or encoding the target block through a fifth context model if the scale of the target block is greater than a scale indicated by the maximum intra-frame prediction parameter, a manner of the division comprising at least one of binary division and quadtree division.

18. The method according to claim 11, wherein the encoding the video frame based on a scale of a target block comprises:
setting, to a preset value, a high-frequency coefficient that is greater than a high-frequency coefficient threshold.

19. A computer device, comprising:
a memory, having a computer program stored therein; and
a processor, configured to load the computer program to implement the image processing method according to any one of claims 1 to 10, or configured to load the computer program to implement the image processing method according to any one of claims 11 to 18.

20. A computer-readable storage medium, having a computer program stored therein, the computer program being adapted to be loaded by a processor and perform the image processing method according to any one of claims 1 to 10, or being adapted to be loaded by a processor and perform the image processing method according to any one of claims 11 to 18.
